# EUROPÄISCHE PATENTANMELDUNG

(11) **EP 2 650 847 A2**
(43) Veröffentlichungstag der Anmeldung: **16.10.2013**
(21) Anmeldenummer: 13156965.9
(22) Anmeldetag: 27.02.2013
(51) Int. Cl.: G07G 1/00, G06Q 20/32, G06Q 20/20

(54) **Rückgeld-Gutschriftsystem und Verfahren zur Gutschrift eines Rückgeld-Betrages auf ein Zielkonto**

(30) Priorität: 28.02.2012 DE 102012101598
(71) Anmelder: Deutsche Postbank AG, 53113 Bonn (DE)
(72) Erfinder: Mehrens, Markus, 53129 Bonn (DE)
(74) Vertreter: Patentanwälte ter Smitten Eberlein Rütten Partnerschaftsgesellschaft

(57) **Zusammenfassung**

Die Erfindung bezieht sich auf ein Rückgeld-Gutschriftsystem (10) mit
einer verkäuferseitigen elektronischen Registrierkasse (40), wobei ein Kassenrückgeld-Handlingmodul (50) an die Registrierkasse (40) angeschlossen ist, das eine Steuerung (56), einen Programmspeicher (57) und ein Drahtlos-Lesemodul (54) aufweist,
einem käuferseitigen Zielkonto-Identifikationsmittel (20;30), in dem eine von dem Drahtlos-Lesemodul (54) drahtlos auslesbare Rückgeld- Zielkontoidentifikation (I1:I2) eines Zielkontos (AI1;AI2) in einem Zielkontoidentifikations-Speicher (24;34) gespeichert ist,
einem bankseitigen Rückgeld-Handhabungssystem (62) bei der Verkäufer-Bank (16), das unmittelbar auf ein Kontokorrentkonto (AD) des Verkäufers zugreifen kann, um einen Rückgeld-Transfer von dem Verkäufer- Kontokorrentkonto (AD) auf das der Zielkontoidentifikation (I1;I2) entsprechende Zielkonto (AI1; AI2) auszulösen, und
einer Datenverbindung (80) zwischen dem Kassenrückgeld-Handlingmodul (50) und dem Rückgeld-Handhabungssystem (62) zur Übertragung eines Rückgeld-Betrages (R) und der Zielkontoidentifikation (I1;I2) von dem Kassenrückgeld-Handlingmodul (50) zu dem Rückgeld-Handhabungssystem (60).

## Beschreibung

Die Erfindung bezieht sich auf ein Rückgeld-Gutschriftsystem und auf ein Verfahren zur Gutschrift eines Rückgeld-Betrages auf ein Zielkonto.

Käufer zahlen für Waren und Dienstleistungen nach wie vor in hohem Maße mit Bargeld. Beim Barkauf gibt der Käufer zum Bezahlen des Kaufpreises zunächst einen Gebe-Betrag, beispielsweise in Form eines Geldscheins, der den Kaufpreis betragsmäßig übersteigt. Der Verkäufer gibt die Betrags-Differenz zwischen dem Gebe-Betrag und dem Kaufpreis in Form von Bargeld als Rückgeld an den Kunden zurück.

Für die Bereitstellung, Handhabung und Entsorgung der Registrierkassen mit Bargeld, insbesondere mit Münzgeld, fallen für den Verkäufer hohe Kosten an, die häufig in keinem vertretbaren Verhältnis zum eigentlichen Geschäft stehen.

Aufgabe der Erfindung ist es demgegenüber, eine Vorrichtung und ein Verfahren zu schaffen, durch die bzw. das die Rückgeld-Handhabungskosten verringert werden.

Diese Aufgabe wird erfindungsgemäß gelöst durch eine Rückgeld-Gutschriftsystem mit den Merkmalen des Anspruches 1 bzw. ein Verfahren zur Gutschrift eines Rückgeld-Betrages mit den Merkmalen des Anspruches 9.

Das Rückgeld-Gutschriftsystem weist eine verkäuferseitige elektronische Registrierkasse auf, in der das Bargeld für das Rückgeld in einer Schublade oder ähnlichem gelagert ist. Die Registrierkasse kann bereits über eine Datenverbindung mit einem Buchungssystem der Verkäufer-Bank verbunden sind sein, um über diese Datenverbindung die bargeldlose Bezahlung des Kaufpreises durch den Kunden auf ein Kontokorrentkonto des Verkäufers durchzuführen. Das Kontokorrentkonto des Verkäufers ist bei der Bank, mit der die Datenverbindung der Registrierkasse besteht.

An die Registrierkasse ist ein separates Kassenrückgeld-Handlingmodul angeschlossen, das eine Steuerung, einen Programmspeicher und ein Drahtlos-Lesemodul aufweist. Das Kassenrückgeld-Handlingmodul kann ein externes Modul sein, das von außen an die Registrierkasse angeschlossen wird, kann jedoch grundsätzlich auch als internes Modul ausgebildet sein, das in die Registrierkasse eingebaut werden kann. In jedem Fall ist das Kassenrückgeld-Handlingmodul dazu geeignet, nachträglich an die oder in der Registrierkasse angeschlossen zu werden. In dem Programmspeicher ist ein Programm abgelegt, das die bargeldlose Gutschrift von Rückgeld steuert.

Der Käufer besitzt ein Zielkonto-Identifikationsmittel, in dem eine von dem Lesemodul drahtlos auslesbare Rückgeld-Zielkontoidentifikation eines Rückgeld-Zielkontos in einem Zielkontoidentifikations-Speicher gespeichert ist. Das Drahtlos-Lesemodul und das Zielkonto-Identifikationsmittel kommunizieren über eine drahtlose Technologie, beispielsweise über Funk oder Licht, oder fotografisch. Bevorzugt wird eine Nahbereichs-Funktechnologie eingesetzt, beispielsweise Bluetooth, RFID, NFC etc. Das Zielkonto-Identifikationsmittel kann aktiv oder passiv ausgebildet sein, das heißt, es kann, muss jedoch nicht über eine eigene Energiequelle verfügen.

Das Zielkonto kann ein Kontokorrentkonto bei der Verkäufer-Bank sein, kann jedoch auch ein Kontokorrentkonto bei einer anderen Bank sein. Das Zielkonto muss jedoch kein Kontokorrentkonto sein, sondern kann auch ein Verrechnungskonto bei der Verkäufer-Bank sein, auf das ein Verfügungsberechtigter Zugriff hat und schließlich bestimmen kann, auf welches Kontokorrentkonto der dort gesammelte Betrag überwiesen wird bzw. dass der dort gesammelte Betrag bar ausgezahlt wird.

Auf das Zielkonto kann der Kunde oder eine andere Person, beispielsweise ein Kind, Enkelkind etc. Zugriff haben, es kann aber ein Kontokorrentkonto oder Verrechnungskonto einer wohltätigen Organisation sein.

Auf der Seite der Verkäufer-Bank ist ein Rückgeld-Handhabungssystem vorgesehen, das unmittelbar auf ein Kontokorrentkonto des Verkäufers bei der Verkäufer-Bank zugreifen kann, um einen Rückgeld-Transfer von dem Verkäufer-Kontokorrentkonto auf das der Zielkontoidentifikation entsprechende Zielkonto auszulösen. Das Rückgeld-Handhabungssystem kann in das Buchungssystem der Verkäufer-Bank integriert sein.

Das Rückgeld-Gutschriftverfahren läuft wie folgt ab: Der Käufer kauft eine Ware oder Dienstleistung bei dem Verkäufer, der den Kaufbetrag in die Registrierkasse eingibt oder einliest. Der Käufer bezahlt bar, und übergibt dem Verkäufer einen den Kaufpreis übersteigenden Gebe-Betrag, dessen Höhe von dem Verkäufer in die Registrierkasse eingegeben wird, so dass die Registrierkasse den Rückgeld-Betrag aus der Differenz des Kaufpreises und des Gebe-Betrags errechnen kann. Der Verkäufer fragt den Käufer, ob der Käufer das Rückgeld bar oder unbar zurückerhalten möchte. Wenn der Käufer das Rückgeld unbar zurückerhalten möchte, fordert der Verkäufer den Käufer auf, das käuferseitige Zielkonto-Identifikationsmittel in die Nähe des Drahtlos-Lesemoduls des Kassenrückgeld-Handlingmoduls zu halten, um die Rückgeld- Zielkontoidentifikation aus dem Zielkonto-Identifikationsmittel auslesen zu können.

Nachdem dies erfolgt ist, sendet das Kassenrückgeld-Handlingmodul einen Rückgeld-Transferauftrag an das bankseitige Rückgeld-Handhabungssystem. Der Rückgeld-Transferauftrag enthält unter anderem den errechneten Rückgeld-Betrag und die Rückgeld-Zielkontoidentifikation des Rückgeld-Zielkontos. Das Rückgeld-Handhabungssystem transferiert schließlich von dem Kontokorrentkonto des Verkäufers den Rückgeld-Betrag auf das Zielkonto, das ein anderes Kontokorrentkonto bei derselben Verkäufer-Bank, ein anderes Kontokorrentkonto bei einer anderen Bank oder ein Verrechnungskonto bei derselben Verkäufer-Bank sein kann.

Mit dem beschriebenen Rückgeld-Gutschriftsystem kann der Barkauf erheblich vereinfacht werden, da, bei Zustimmung des Kunden, kein bares Rückgeld mehr fließt, sondern der gesamte Rückgeld-Betrag bargeldlos abgewickelt wird. Hierdurch werden die Bargeld-Kosten des Verkäufers verringert.

Gemäß einer bevorzugten Ausgestaltung weist das Kassenrückgeld-Handlingmodul und/oder die Registrierkasse eine Gutschrift-Taste auf, durch deren Betätigung das Kassenrückgeld-Handlingmodul bzw. das Lesemodul aktiviert wird. Sobald der Käufer dem Verkäufer bestätigt hat, dass das Rückgeld bargeldlos gezahlt werden soll, betätigt der Verkäufer die Gutschrift-Taste, woraufhin der bargeldlose Rückgeld-Prozess in dem Kassenrückgeld-Handlingmodul aktiviert wird. Insbesondere wird hierdurch mittelbar oder unmittelbar das Drahtlos-Lesemodul aktiviert, so dass es bereit ist, die Rückgeld-Zielkontoidentifikation aus dem käuferseitigen Zielkonto-Identifikationsmittel auszulesen.

Vorzugsweise weist das Kassenrückgeld-Handlingmodul einen Quittungssignal-Generator auf, der nach dem Auslesen der Zielkontoidentifikation aus dem Zielkonto-Identifikationsmittel aktiviert wird. Sobald durch das Lesemodul eine gültige Zielkontoidentifikation eingelesen wurde, wird der Quittungssignal-Generator aktiviert, so dass der Käufer eine Rückmeldung darüber erhält, dass die Zielkontoidentifikation aus seinem Zielkonto-Identifikationsmittel erfolgreich ausgelesen wurde. Der Quittungssignal-Generator ist bevorzugt ein akustischer und/oder optischer Quittungssignal-Generator. Durch das Quittungssignal hat der Käufer eine gewisse Kontrolle darüber, dass als Zielkonto tatsächlich die Zielkontoidentifikation seines Zielkonto-Identifikationsmittels eingelesen wurde.

Gemäß einer bevorzugten Ausgestaltung weist das Kassenrückgeld-Handlingmodul oder die Registrierkasse eine Zielkonto-Anzeige auf, auf der nach dem Auslesen der Zielkontoidentifikation aus dem Zielkonto-Identifikationsmittel eine Zielkontoinformation angezeigt wird. Die Zielkonto-Anzeige kann ein separates Display an dem Kassenrückgeld-Handlingmodul sein, kann jedoch auch grundsätzlich das an der Registrierkasse bereits verbaute kundenseitige Display sein. Durch die Zielkonto-Anzeige erhält der Kunde die Möglichkeit, die Richtigkeit des von ihm gewählten und von dem Lesemodul in das Kassenrückgeld-Handlingmodul eingelesenen Zielkontos zu überprüfen.

Vorzugsweise wird das käuferseitige Zielkonto-Identifikationsmittel von einem Mobiltelefon gebildet, das über eine entsprechende drahtlose Nahbereichs-Funktechnologie verfügt. In dem Mobiltelefon ist ein Rückgeld-Abwicklungsprogramm installiert, also ein entsprechendes so genanntes App. Das Rückgeld-Abwicklungsprogramm in dem Mobiltelefon kann beispielsweise durch das Drahtlos-Lesemodul des Kassenrückgeld-Handlingmoduls aktiviert werden. Alternativ kann die Aktivierung auch durch einen entsprechenden Tastendruck an dem Mobiltelefon erfolgen.

In dem Mobiltelefon können grundsätzlich mehrere verschiedene Zielkonten gespeichert sein. Vor der Drahtlos-Übertragung der betreffenden Zielkontoidentifikation von dem Zielkonto-Identifikationsmittel, also von dem Mobiltelefon, zu dem Kassenrückgeld-Handlingmodul, wählt der Käufer das gewünschte Zielkonto an dem Mobiltelefon aus, wobei bevorzugt der Rückgeld-Betrag auf der Anzeige des Mobiltelefone angezeigt wird. Erst nach der entsprechenden Zielkonto-Auswahl und endgültigen Bestätigung des Zielkontos an dem Mobiltelefon wird die Zielkontoidentifikation des ausgewählten Zielkontos von dem Mobiltelefon zu dem Lesemodul des Kassenrückgeld-Handlingmoduls übertragen.

Die Verwendung eines Mobiltelefone als Zielkonto-Identifikationsmittel bietet den Vorteil, dass zum Einen die Rückgeld-Prozedur für den Käufer sehr transparent ist und zum Anderen der Käufer problemlos aus einer Vielzahl von verschiedenen Zielkonten wählen kann.

Gemäß einer alternativen Ausführungsform kann das käuferseitige Zielkonto-Identifikationsmittel von einem Passiv-Identifikationsmittel gebildet sein. Das Passiv-Identifikationsmittel weist keine eigene Energiequelle auf, so dass es sehr preiswert zur Verfügung gestellt werden kann. Beispielsweise kann das Passiv-Identifikationsmittel als optischer Informationsträger mit einem zweidimensionalen Barcode ausgebildet sein, in dem die Zielkontoidentifikation enthalten ist. Wenn die Registrierkasse bereits einen optischen Scanner aufweist, könnte dieser von dem Rückgeld-Handhabungssystem als Lesemodul benutzt werden. Das Passiv-Identifikationsmittel kann jedoch auch ein passiver RFID-Chip sein, den der Käufer in Form einer Karte, eines Schlüsselanhängers etc. bei sich trägt.

Das Passiv-Identifikationsmittel eignet sich besonders in Verbindung mit einem Verrechnungskonto bei der Verkäufer-Bank. Das Passiv-Identifikationsmittel kann optisch bereits entsprechend gekennzeichnet sein, beispielsweise mit dem Namen und/oder einem Foto des Zielkonto-Inhabers etc.

Im Folgenden wird unter Bezugnahme auf die Zeichnungen ein Ausführungsbeispiel der Erfindung näher erläutert.

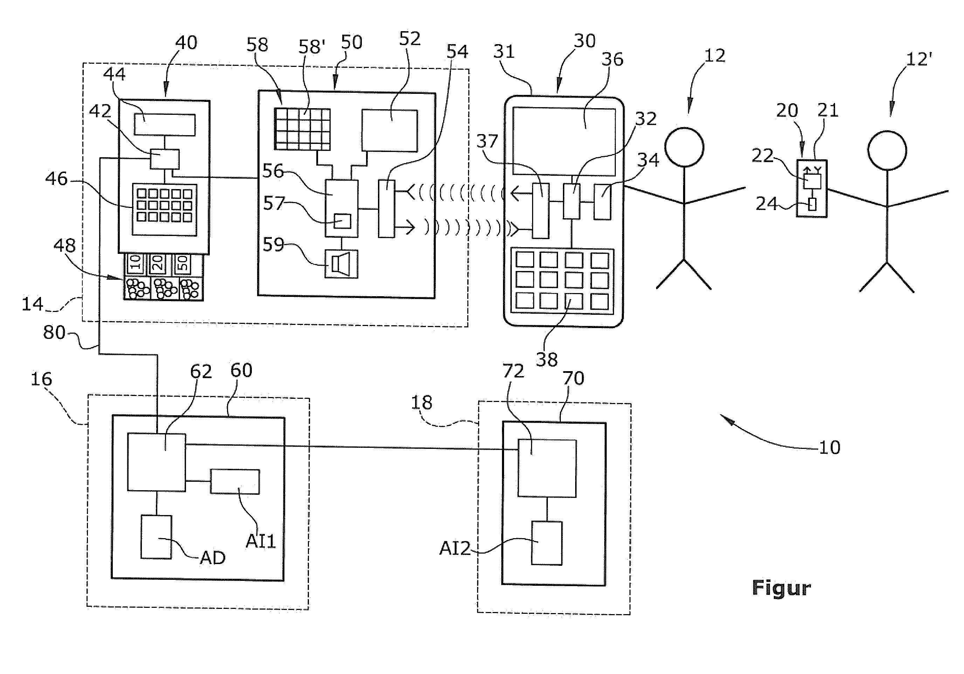

Die Figur zeigt schematisch ein Rückgeld-Gutschriftsystem für den bargeldlosen Transfer von Rückgeld.

In der Figur ist ein Rückgeld-Gutschriftsystem 10 dargestellt, das einen Verkäufer-Bereich 14, eine Verkäufer-Bank 16 und eine weitere Bank 18 aufweist. Ferner sind zwei Varianten eines Käufers 12; 12' dargestellt, dem jeweils ein Zielkonto-Identifikationsmittel 30;20 zugeordnet ist. Das dargestellte Rückgeld-Gutschriftsystem 10 dient dem bargeldlosen Transfer von Rückgeld bei einem Barkauf.

In dem Verkäufer-Bereich 14 sind eine Registrierkasse 40 und ein mit der Registrierkasse 40 verbundenes Kassenrückgeld-Handlingmodul 50 vorgesehen. Das externe Kassenrückgeld-Handlingmodul 50 ist nachträglich installiert worden, und ist über eine Datenleitung mit der Registrierkasse 40 verbunden.

Die Registrierkasse 40 weist eine Bargeld-Schublade 48 auf, in der Bargeld in Form von Scheinen und Münzen gelagert ist. Die Registrierkasse 40 weist ferner eine Tastatur 46, eine Anzeige 44 und eine elektronische Steuerung 42 auf. Die Registrierkasse 40 bzw. ihre Steuerung 42 ist über eine Datenverbindung 80 mit einem Rückgeld-Handhabungssystem 62 eines bankseitigen Buchungssystems 60 der Verkäufer-Bank 16 elektronisch verbunden.

Das Kassenrückgeld-Handlingmodul 50 weist eine Tastatur 58 mit einer Gutschrift-Taste 58', eine Anzeige 52, eine elektronische Steuerung 56 mit einem Programmspeicher 57, einen akustischen Quittungssignal-Generator 59 und ein Drahtlos-Lesemodul 54 in NFC-Technologie auf.

Das Rückgeld-Handhabungssystem 62 bei der Verkäufer-Bank 16 kann auf ein Kontokorrentkonto AD des Verkäufers in der Weise zugreifen, dass es von dem Verkäufer-Kontokorrentkonto AD einen bestimmten Geldbetrag auf ein Zielkonto transferieren kann und darf. Das Zielkonto kann ein anderes Kontokorrentkonto bei der Verkäufer-Bank 16, kann ein Verrechnungskonto AI1 bei der Verkäufer-Bank 16 oder kann ein Kontokorrentkonto AI2 innerhalb eines Buchungssystems 70 einer anderen Bank 18 sein. Das Buchungssystem 70 der anderen Bank 18 weist eine Buchungssteuerung 72 auf, die Zugriff auf das andere Kontokorrentkonto AI2 hat.

Der Kunde 12 kann als Zielkonto-Identifikationsmittel 30 ein Mobiltelefon 31 benutzen, das über ein NFC-Funkmodul 37 verfügt, das mit dem Drahtlos-Lesemodul 54 des Kassenrückgeld-Handlingmoduls 50 kommunizieren kann. Das Mobiltelefon 31 weist ferner eine Tastatur 38, eine Anzeige 36, einen Zielkontoinformations-Speicher 34 und eine Steuerung 32 auf. In einem Programmspeicher der Mobiltelefon-Steuerung 32 ist ein kleines Anwendungsprogramm, ein so genanntes App, gespeichert, das die Kommunikation mit dem Kassenrückgeld-Handlingmodul 50 steuert. In dem Zielkontoidentifikations-Speicher 34 ist eine eindeutige Zielkontoidentifikation 12 des Zielkontos AI2 gespeichert.

Alternativ oder ergänzend kann der Kunde 12' als Zielkonto-Identifikationsmittel 20 ein Passiv Identifikationsmittel 21 besitzen, das ein passives NFC-Funkmodul 22 und einen zugeordneten Zielkontoidentifikations-Speicher 24 aufweist, in dem die Zielkontoidentifikation I1 eines Zielkontos AI1 gespeichert ist. Dieses Zielkonto AI1 ist in diesem Fall ein Verrechnungskonto bei der Verkäufer-Bank 16.

Das Rückgeld-Gutschriftverfahren läuft wie folgt ab:
Der Käufer 12; 12' kauft eine Ware oder Dienstleistung bei dem Verkäufer, der zunächst den Kaufbetrag über die Tastatur 46 in die Registrierkasse 40 eingibt oder über einen Scanner einliest. Der Käufer 12; 12' bezahlt in bar, und übergibt dem Verkäufer einen den Kaufpreis übersteigenden baren Gebe-Betrag G, dessen Höhe von dem Verkäufer über die Tastatur 46 in die Registrierkasse 40 eingegeben wird, so dass die Registrierkasse 40 den Rückgeld-Betrag R aus der Differenz des Kaufpreises P und des Gebe-Betrags G errechnet.

Der Verkäufer fragt den Käufer 12; 12', ob der Käufer 12; 12' das Rückgeld bar oder unbar zurückerhalten möchte. Wenn der Käufer 12; 12' das Rückgeld unbar zurückerhalten möchte, betätigt der Verkäufer die Gutschrift-Taste 58' auf der Tastatur 58 des Kassenrückgeld-Handlingmoduls 50. Der Verkäufer fordert nun den Käufer 12; 12' mündlich auf, das käuferseitige Zielkonto-Identifikationsmittel 30; 20 in die Nähe des Drahtlos-Lesemoduls 54 des Kassenrückgeld-Handlingmoduls 50 zu halten, um die Rückgeld- Zielkontoidentifikation I1,I2 aus dem Zielkonto-Identifikationsmittel 20;30 auslesen zu können.

Der Käufer 12; 12' hält sein Zielkonto-Identifikationsmittel 30; 20 mit einem Abstand von höchstens wenigen Zentimetern an das Kassenrückgeld-Handlingmodul 50 bzw. an das Drahtlos-Lesemodul 54 des Kassenrückgeld-Handlingmoduls 50. Sobald der Abstand klein genug ist, fordert das Drahtlos-Lesemodul 54 von dem betreffenden Identifikationsmittel 20; 30 eine Zielkontoidentifikation I1; 12 an.

Im Falle des Passiv-Identifikationsmittels 21 wird automatisch die Zielkontoidentifikation I2 aus dem Zielkontoidentifikations-Speicher 24 an das Drahtlos-Lesemodul 54 übertragen. Sobald das Drahtlos-Lesemodul 54 die Zielkontoidentifikation 12 empfangen hat, wird der akustische Quittungssignal-Generator 49 aktiviert, der ein kurzes akustisches Quittungssignal emittiert. Hierdurch kann sich der Käufer 12' sicher sein, dass in diesem Moment die Zielkontoidentifikation I2 aus seinem Zielkonto-Identifikationsmittel 20 ausgelesen wurde, so dass eine Manipulation ausgeschlossen werden kann. Ferner kann das Zielkonto AI1 auf der Anzeige 52 des Kassenrückgeld-Handlingmoduls 50 angezeigt werden, so dass der Käufer 12' das gewählte Zielkonto AI1 visuell eindeutig identifizieren kann.

Im Falle des als Mobiltelefon 31 ausgebildeten Zielkonto-Identifikationsmittels 30 wird in dem Mobiltelefon 31 durch die drahtlose Verbindungsherstellung ein Rückgeld-Anwendungsprogramm gestartet, das den Käufer 12 über die Mobiltelefon-Anzeige 36 zur Auswahl eines von möglicherweise mehreren Zielkonten auffordert. Ferner kann auf der Mobiltelefon-Anzeige 36 der von dem Kassenrückgeld-Handlingmodul 50 ermittelte und an das Mobiltelefon 31 übermittelte Rückgeld-Betrag R angezeigt werden. Der Kunde 12 wählt über die Mobiltelefon-Tastatur 38 ein Zielkonto AI2 aus, dessen zugehörige Zielkontoidentifikation I2 anschließend von dem Funkmodul 37 des Mobiltelefons 31 an das Drahtlos-Lesemodul 54 übertragen wird. Der Empfang der Zielkontoidentifikation 12 wird durch ein akustisches Quittungssignal des Quittungssignal-Generators 49 bestätigt.

Anschließend generiert die Steuerung 56 des Kassenrückgeld-Handlingmoduls 50 aus der Zielkontoidentifikation I1; I2 und dem Rückgeld-Betrag R einen Transfer-Datensatz, der an die Registrierkassen-Steuerung 42, und von dieser über die Datenverbindung 80 an das Rückgeld-Handhabungssystem 62 der Verkäufer-Bank 16 übertragen wird.

Das Rückgeld-Handhabungssystem 62 löst einen Transfer des Rückgeld-Betrags R auf das der Zielkontoidentifikation I1;I2 entsprechende Zielkonto AI1; AI2 aus.

## Patentansprüche

1. Rückgeld-Gutschriftsystem (10) mit
einer verkäuferseitigen elektronischen Registrierkasse (40), wobei ein Kassenrückgeld-Handlingmodul (50) an die Registrierkasse (40) angeschlossen ist, das eine Steuerung (56), einen Programmspeicher (57) und ein Drahtlos-Lesemodul (54) aufweist,
einem käuferseitigen Zielkonto-Identifikationsmittel (20;30), in dem eine von dem Drahtlos-Lesemodul (54) drahtlos auslesbare Rückgeld- Zielkontoidentifikation (I1;I2) eines Zielkontos (AI1;AI2) in einem Zielkontoidentifikations-Speicher (24;34) gespeichert ist,
einem bankseitigen Rückgeld-Handhabungssystem (62) bei der Verkäufer-Bank (16), das unmittelbar auf ein Kontokorrentkonto (AD) des Verkäufers zugreifen kann, um einen Rückgeld-Transfer von dem Verkäufer- Kontokorrentkonto (AD) auf das der Zielkontoidentifikation (I1;I2) entsprechende Zielkonto (AI1; AI2) auszulösen, und
einer Datenverbindung (80) zwischen dem Kassenrückgeld-Handlingmodul (50) und dem Rückgeld-Handhabungssystem (62) zur Übertragung eines Rückgeld-Betrages (R) und der Zielkontoidentifikation (I1;12) von dem Kassenrückgeld-Handlingmodul (50) zu dem Rückgeld-Handhabungssystem (60).

2. Rückgeld-Gutschriftsystem (10) nach Anspruch 1, wobei das Kassenrückgeld-Handlingmodul (50) oder die Registrierkasse (40) eine Gutschrift-Taste (58') aufweist, durch deren Betätigung das Lesemodul (54) aktiviert wird.

3. Rückgeld-Gutschriftsystem (10) nach einem der vorangegangenen Ansprüche, wobei das Kassenrückgeld-Handlingmodul (50) einen Quittungssignal-Generator (59) aufweist, der nach dem Lesen der Zielkontoidentifikation (I1;I2) aus dem Zielkonto-Identifikationsmittel (20; 30) aktiviert wird.

4. Rückgeld-Gutschriftsystem (10) nach einem der vorangegangenen Ansprüche, wobei das Kassenrückgeld-Handlingmodul (50) oder die Registrierkasse eine Zielkonto-Anzeige (52) aufweist, auf der nach dem Auslesen der Zielkontoidentifikation (I1;I2) aus dem Zielkonto-Identifikationsmittel (20;30) eine Zielkontoinformation angezeigt wird.

5. Rückgeld-Gutschriftsystem (10) nach einem der vorangegangenen Ansprüche, wobei das käuferseitige Zielkonto-Identifikationsmittel (30) von einem Mobiltelefon (31) gebildet wird.

6. Rückgeld-Gutschriftsystem (10) nach einem der Ansprüche 1-4, wobei das käuferseitige Zielkonto-Identifikationsmittel (20) von einem Passiv- Identifikationsmittel (21) gebildet wird.

7. Rückgeld-Gutschriftsystem (10) nach einem der vorangegangenen Ansprüche, wobei das Zielkonto (AI1) ein Verrechnungskonto bei der Verkäufer- Bank (16) ist.

8. Rückgeld-Gutschriftsystem (10) nach einem der Ansprüche 1-6, wobei das Zielkonto (AI2) ein Kontokorrentkonto bei einer anderen Bank (18) ist.

9. Verfahren zur Gutschrift eines Rückgeld-Betrages (R) auf ein Zielkonto, für ein Rückgeld-Gutschriftsystem nach einem der Ansprüche 2 bis 8 und mit den Verfahrensschritten:
Eingabe eines Kaufpreises (P) in die Registrierkasse (40),
Eingabe eines Gebe-Betrags (G) in die Registrierkasse (40),
Ermittlung des Rückgeld-Betrags (R) aus der Differenz des Gebe-Betrags (G) und des Kaufpreises (P) in der Registrierkasse (40),
Auslösen einer Gutschrift-Taste (58') an der Registrierkasse (40) oder an dem Kassenrückgeld-Handlingmodul (50), wodurch das Lesemodul (54) aktiviert wird,
Einlesen der Rückgeld-Zielkontoidentifikation (I1;12) aus dem Zielkonto-Identifikationsmittel (20;30) in das Kassen Rückgeld-Handlingmodul (50),
Übersenden der Rückgeld-Zielkontoidentifikation (I1;12) und des Rückgeld-Betrags (R) über die Datenverbindung (80) an das verkäuferbankseitige Rückgeld-Handhabungssystem (62),
Transfer des Rückgeld-Betrags (R) von dem Kontokorrentkonto (AD) des Verkäufers auf das der Zielkontoidentifikation (I1;I2) entsprechende Zielkonto (AI1;AI2).
